# EUROPÄISCHE PATENTSCHRIFT

(11) **EP 3 574 738 B1**
(45) Veröffentlichungstag und Bekanntmachung des Hinweises auf die Patenterteilung: **30.07.2025**
(21) Anmeldenummer: 19168034.7
(22) Anmeldetag: 09.04.2019
(51) Int. Cl.: A01D 41/00, A01D 69/00, F16H 7/08, F16H 7/12

(54) **RIEMENGETRIEBE SOWIE VERFAHREN ZU DESSEN BETRIEB**
BELT DRIVE SYSTEM AND METHOD FOR THE OPERATION OF SAME
TRANSMISSION À COURROIE AINSI QUE SON PROCÉDÉ DE FONCTIONNEMENT

(30) Priorität: 30.05.2018 DE 102018113006
(43) Veröffentlichungstag der Anmeldung: 04.12.2019
(73) Patentinhaber: CLAAS Selbstfahrende Erntemaschinen GmbH, 33428 Harsewinkel (DE)
(72) Erfinder: Poppenborg, Maik, 33428 Marienfeld (DE); Schiewer, Stefan, 48231 Warendorf (DE); Lütkeschümer, Malte, 49080 Osnabrück (DE); Schönert, Benedikt, 59823 Arnsberg (DE); Weinrich, Ingo, 26203 Wardenburg (DE)
(74) Vertreter: CLAAS Gruppe

(56) Entgegenhaltungen:
- EP-A1- 0 243 237
- EP-A1- 0 361 899
- EP-A1- 3 228 175
- WO-A1-01/84014
- DE-A1- 10 045 144
- DE-A1- 4 428 560
- JP-A- 2018 004 081

## Beschreibung

Die vorliegende Anmeldung betrifft ein Riemengetriebe gemäß dem Oberbegriff von Anspruch 1. Ferner betrifft die vorliegende Anmeldung ein Verfahren zu Betrieb eines Riemengetriebes gemäß dem Oberbegriff von Anspruch 7.

Das Riemengetriebe umfasst grundsätzlich mindestens eine Antriebsscheibe, mindestens eine Abtriebsscheibe, mindestens einen Riemen sowie mindestens einen Riemenspanner. Die Antriebsscheibe kann insbesondere mit einer Antriebswelle einer Antriebseinrichtung zusammenwirken, die beispielsweise von einer Verbrennungskraftmaschine gebildet sein kann. Mittels des Riemens, der sowohl mit der Antriebsscheibe als auch mit der Abtriebsscheibe zusammenwirkt, ist es möglich, ein an der Antriebsscheibe zur Verfügung gestelltes Drehmoment auf die Abtriebsscheibe zu übertragen. Hierzu ist es erforderlich, dass der Riemen unter einer gewissen Spannung an der Antriebsscheibe sowie der Abtriebsscheibe anliegt, um ein Durchrutschen des Riemens, den sogenannten "Schlupf", zu unterbinden. Dabei versteht es sich, dass bei Auftreten eines Schlupfs zwischen dem Riemen und der Antriebs- und/oder der Abtriebsscheibe lediglich eine verminderte oder sogar gar keine Kraftübertragung stattfindet.

Um den Riemen auf eine Betriebsspannung zu spannen und während eines Betriebs des Riemengetriebes auf der Betriebsspannung zu halten, umfasst das Riemengetriebe den Riemenspanner. Dieser umfasst eine an einem Haltearm angeordnete Spannrolle, wobei der Haltearm, insbesondere an einer übergeordneten Struktur, beispielsweise einem festen Rahmen, unter Ausbildung einer Schwenkachse verschwenkbar gelagert ist. Eine Drehachse, um die sich die Spannrolle relativ zu dem Haltearm drehen kann, ist beabstandet von der Schwenkachse des Haltearms angeordnet, sodass die Spannrolle mittels Verschwenkens des Riemenspanners auf einer Kreisbahn um die Schwenkachse bewegbar ist. Die Schwenkachse ist dabei insbesondere senkrecht zu einer Riemenebene orientiert, innerhalb derer der Riemen auf einem Riemenpfad fortwährend umläuft.

Um den Riemenspanner mit einem Spannmoment zu beaufschlagen, wirkt dieser mit einer Spanneinrichtung zusammen, mittels derer das Spannmoment ausübbar ist. Die Spanneinrichtung kann insbesondere eine Spannfeder umfassen, die mit einer Vorspannung versehen ist. Ferner wirkt der Riemenspanner mit einem Dämpfer zusammen, der eine Schwenkbewegung des Riemenspanners um die Schwenkachse dämpft. Auf diese Weise sind schlagartige bzw. ruckartige Bewegungen der Spannrolle relativ zu der Schwenkachse zumindest teilweise unterbunden.

Riemengetriebe der vorstehenden Art sind im Stand der Technik bereits bekannt. Hierzu wird auf die deutsche Offenlegungsschrift DE 37 18 227 A1 hingewiesen. Diese betrifft eine Spannvorrichtung für Riemen, die insbesondere in Verbindung mit Kraftfahrzeugmotoren Anwendung finden kann. Die Besonderheit besteht gemäß genannter Schrift darin, einen Dämpfungsmechanismus für die Spannvorrichtung vorzusehen, mittels dessen die Spannvorrichtung in Abhängigkeit ihrer Bewegung dämpfbar ist. Das heißt, dass eine Verschwenkung der Spannvorrichtung in eine erste Drehrichtung um die Schwenkachse frei vom Einfluss des Dämpfers ist, während die Verschwenkung in die entgegengesetzte Drehrichtung mittels des Dämpfers gedämpft wird. Die WO01/84014A zeigt ebenfalls ein Riemengetriebe des Standes der Technik.

In einigen Anwendungsfällen, insbesondere bei landwirtschaftlichen Arbeitsmaschinen, hat es sich als problematisch herausgestellt, dass die Antriebsscheibe vergleichsweise stoßartigen Änderungen des anliegenden Drehmoments unterworfen ist. Dieses wird mittels des Riemens direkt an die Abtriebsscheibe und damit die zugehörige Abtriebseinrichtung, beispielsweise einen Lüfter, weitergegeben, wodurch die Abtriebseinrichtung - ebenso wie der Riemen selbst - einem erhöhten Verschleiß unterlegen ist. Als Problem kommt hinzu, dass bei plötzlichen Veränderungen des Drehmoments an der Antriebsscheibe es zu einer Lastumkehr in dem Riemen kommen kann. Dies tritt dann auf, wenn das Drehmoment an der Antriebsscheibe abnimmt, sodass zumindest kurzzeitig eine Übertragung eines Drehmoments von dem Abtrieb auf den Antrieb stattfindet. Damit geht einher, dass das Leertrum des Riemens kurzzeitig zum Lasttrum und umgekehrt das Lasttrum zum Leertrum wird. Somit wird der Abschnitt des Riemens, der in einem normalen Betriebszustand das Leertrum bildet, kurzzeitig "gestrafft", wodurch auch der in aller Regel auf das Leertrum wirkende Riemenspanner beeinflusst wird. Letzterer wird in eine Richtung von dem Riemen weg ausgelenkt. Mittels Wirkung der Spanneinrichtung wird der Riemenspanner bei sich anschließender Umkehr der Belastung des Riemens zurück in die typische Betriebssituation unmittelbar dem sich entlastenden Riemen nachgeführt, sodass letzterer wieder die Betriebsspannung einnimmt. Sowohl die stoßartige Veränderung des Zustands des Riemens als auch die damit verbundene stoßartige Nachspannung des Riemens mittels des Riemenspanners führt zu einem vergleichsweise hohen Verschleiß der beteiligten Komponenten.

Der vorliegenden Anmeldung liegt nunmehr die Aufgabe zugrunde, ein Riemengetriebe bereitzustellen, das als solches einem geringeren Verschleiß unterliegt als auch beteiligte Bauteile des jeweiligen Antriebsstrangs vor übermäßigem Verschleiß schützt.

Die Aufgabe wird erfindungsgemäß mittels eines Riemengetriebes gemäß Anspruch 1 gelöst. Vorteilhafte Ausgestaltungen ergeben sich aus den Unteransprüchen 2 bis 6.

Das erfindungsgemäße Riemengetriebe ist dadurch gekennzeichnet, dass der Dämpfer richtungsabhängige Dämpfungskonstanten aufweist, wobei eine erste Dämpfungskonstante zur Dämpfung einer Schwenkbewegung des Riemenspanners um die Schwenkachse, die mit einer Bewegung der Spannrolle auf den Riemen zu korrespondiert, größer ist als eine zweite Dämpfungskonstante zur Dämpfung einer Schwenkbewegung des Riemenspanners um die Schwenkachse, die mit einer Bewegung der Spannrolle von dem Riemen weg korrespondiert. Vorteilhafterweise bleibt der Dämpfer bei der Schwenkbewegung, die mit der Bewegung der Spannrolle von dem Riemen weg korrespondiert, wirkungslos (zweite Dämpfungskonstante vernachlässigbar klein). Der Dämpfer ist in diesem Sonderfall einfach wirkend ausgebildet, sodass er lediglich bei Auftreten der Schwenkbewegung wirkt, die mit einer Bewegung der Spannrolle auf den Riemen zu korrespondiert.

Übertragen auf die vorstehend dargelegte Problematik bewirkt die Erfindung, dass im Zuge insbesondere eines schlagartigen Abfalls des Drehmoments an der Antriebsscheibe und der damit einhergehenden kurzzeitigen Umkehr des Leertrums in das Lasttrum des Riemens der Riemenspanner infolge der damit einhergehenden "Straffung" des Riemens entgegen einer höchsten kleinen Dämpfungskonstante des Dämpfers in eine Richtung von dem Riemen weg "verdrängt" werden kann. Mit anderen Worten wirkt der Dämpfer dieser Verschwenkung des Riemenspanners maximal lediglich geringfügig entgegen. Umgekehrt wird der Riemenspanner jedoch durch Wirkung des Dämpfers in sehr viel größerem Ausmaß daran gehindert, schlagartig nach seiner Auslenkung wieder zurück in Richtung auf den Riemen zu zu verschwenken und den Riemen unmittelbar wieder auf seine volle Betriebsspannung zu spannen. Stattdessen wird der Riemenspanner bewusst verzögert nachgeführt und infolgedessen der Riemen in Abwesenheit der vollen Wirkung des Riemenspanners für einen gewissen Zeitraum auf einer Unterspannung betrieben, die unterhalb des Niveaus der Betriebsspannung liegt und einen Schlupf des Riemens an der Antriebsscheibe und/oder der Abtriebsscheibe ermöglicht. Der Schlupf geht damit einher, dass eine Übertragung des an der Antriebsscheibe anliegenden Drehmoments auf die Abtriebsscheibe lediglich im begrenzten Umfang stattfindet.

Das erfindungsgemäße Riemengetriebe hat viele Vorteile. Insbesondere wird infolge des genannten und bewusst herbeigeführten Schlupfs eine ungeplante und unerwünschte Drehmomentspitze, die an der Antriebsscheibe anliegt, wunschgemäß weder auf den Riemen selbst noch auf die Abtriebsscheibe und die damit verbundene Abtriebseinrichtung weitergegeben, wodurch der Riemen sowie die Abtriebseinrichtung vor übermäßigem Verschleiß geschützt sind. Der Riemenspanner wird unter Wirkung der Spanneinrichtung sowie des richtungsabhängigen Dämpfers unterdessen nach seiner Auslenkung nur verzögert nachgeführt, sodass der Riemen vergleichsweise sanft wieder auf seine Betriebsspannung gespannt wird. In einem normalen Betriebszustand selbst liegt der Riemen fortwährend in seiner Betriebsspannung vor, sodass die normale Übertragung eines Drehmoments von der Antriebsscheibe auf die Abtriebsscheibe durch den Dämpfer nicht negativ beeinflusst ist.

Bevorzugt ist eine solche Ausgestaltung des Riemengetriebes, bei der die erste Dämpfungskonstante des Dämpfers mindestens 5-mal, vorzugsweise mindestens 7,5-mal, weiter vorzugsweise mindestens 10-mal, so groß ist wie die zweite Dämpfungskonstante.

Wie vorstehend bereits angedeutet, kann es überdies besonders vorteilhaft sein, wenn der Dämpfer einfach wirkend ausgebildet ist, sodass mittels des Dämpfers lediglich die Schwenkbewegung des Riemenspanners um die Schwenkachse dämpfbar ist, die mit der Bewegung der Spannrolle auf den Riemen zu korrespondiert. In diesem Fall ist die zweite Dämpfungskonstante gleich Null, wobei minimale Reibwiderstände, die durch die Konstruktion des Dämpfers bedingt immer vorhanden sind, vernachlässigt werden.

In einer vorteilhaften Ausgestaltung des erfindungsgemäßen Riemengetriebes ist der Dämpfer von einer Kolben-Zylinder-Einheit gebildet. Diese kann insbesondere mit einer die beiden Arbeitsräume beidseits des Kolbens strömungstechnisch verbindenden Bypassleitung versehen sein, die mit einem Rückschlagventil ausgestattet ist, sodass eine Strömung eines entsprechenden Arbeitsfluids in eine Richtung unterbunden ist, während eine Strömung in die entgegengesetzte Richtung kaum gehindert oder sogar ungehindert möglich ist. Die Strömung des Arbeitsfluids in die mittels des Rückschlagventils unterbundenen Strömungsrichtung ist dann beispielsweise nur durch Drosselöffnungen möglich, die die Strömung erschweren und auf diese Weise den gewünschten Dämpfungseffekt erzielen. In die entgegengesetzte Richtung wirkt der Dämpfer aufgrund der Bypassleitung hingegen in einem deutlich verringerten Ausmaß oder sogar gar nicht. Auf diese Weise kann ein richtungsabhängiger Dämpfer besonders einfach umgesetzt werden. Ganz allgemein ist der Dämpfer vorteilhafterweise in Form eines Viskositätsdämpfer bzw. Viskodämpfers ausgebildet.

Weiterhin ist es von besonderem Vorteil, wenn der Riemenspanner zumindest in einem normalen Betriebszustand des Riemengetriebes mit einem Leertrum des Riemens zusammenwirkt. Hierdurch lässt sich die Spannung des Riemens besonders einfach einstellen.

In einer weiterhin vorteilhaften Ausgestaltung des erfindungsgemäßen Riemengetriebes umfasst die Spanneinrichtung eine Spannfeder, deren Federkraft mittels mindestens eines Spannhebels auf den Haltearm des Riemenspanners übertragbar ist. Insbesondere ist der Spannhebel derart an dem Haltearm angeordnet, dass sich ein Hebelarm zwischen einer Wirkungslinie der Federkraft der Spannfeder und der Schwenkachse des Riemenspanners mit Verschwenken des Riemenspanners um die Schwenkachse verändert. Auf diese Weise ist die Möglichkeit gegeben, dass auf den Riemenspanner wirkende Spannmoment automatisch infolge einer Schwenkbewegung des Riemenspanners zu verändern. Dies ist insoweit von Vorteil, als der Riemen und die Spannrolle des Riemenspanners je nach Stellung des Riemenspanners verschiedene Umschlingungswinkel ausbilden, um die der Riemen an der Spannrolle geführt ist. Je nach Stellung des Riemenspanners weist der Riemen eine andere Spannung auf, wodurch eine auf dem Riemenspanner wirkende, durch den Riemen bedingte Kraft ebenfalls veränderlich ist. Mittels der genannten Ausgestaltung ist es möglich, der Veränderung dieser durch den Riemen bedingten, auf den Riemenspanner wirkenden Kraft eine entsprechende Veränderung des Spannmoments entgegenzusetzen, sodass im Ergebnis die Federkraft der Spannvorrichtung und die Spannung des Riemens in einen zumindest im Wesentlichen konstanten Verhältnis zueinander stehen. Auf diese Weise ist es zum Beispiel möglich, mittels Erfassung der Federkraft eine genaue Aussage über die in dem Riemen wirkende Spannung zu treffen.

Die zugrunde liegende Aufgabe wird ferner in verfahrenstechnischer Hinsicht mittels des Verfahrens mit den Merkmalen des Anspruchs 9 gelöst. Dieses Verfahren ist durch den Verfahrensschritt gekennzeichnet, dass die Verschwenkung des Riemenspanners in Richtung auf den Riemen zu mittels eines richtungsabhängigen Dämpfers gedämpft wird, wobei der Dämpfer die Verschwenkung des Riemenspanners in eine Richtung von dem Riemen weg schwächer dämpft als die Verschwenkung des Riemenspanners auf den Riemen zu.

Das erfindungsgemäße Verfahren ist mittels des erfindungsgemäßen Riemengetriebes besonders einfach durchführbar. Hierbei werden die vorstehend bereits genannten Vorteile erreicht. Insbesondere wird der Effekt erzielt, dass nach Auslenkung des Riemenspanners, insbesondere infolge eines plötzlichen Abfalls des Drehmoments an der Antriebsscheibe und einer damit einhergehenden Umkehr von Leertrum und Lasttrum des Riemens, die Nachführung des Riemenspanners durch Wirkung des richtungsabhängigen Dämpfers lediglich verzögert erfolgt, sodass der Riemen für einen gewissen Zeitraum einem Schlupf unterliegt, da er sich nicht auf seiner Betriebsspannung befindet. Hierdurch werden stoßartige Schwankungen des Drehmoments an der Antriebsscheibe lediglich vermindert oder gar nicht an den Riemen sowie an die Abtriebseinrichtung übertragen, wodurch sowohl der Riemen als auch die Abtriebseinrichtung geschont werden. Der Riemen wird sodann mittels des Riemenspanners wieder auf seine Betriebsspannung gespannt.

Vorteilhafterweise ist das Verfahren derart ausgestaltet, dass ein auf den Riemenspanner wirkendes Spannmoment, mittels dessen der Riemenspanner gegen den Riemen verspannbar und damit letzterer auf seiner Betriebsspannung haltbar ist, infolge einer Schwenkbewegung des Riemenspanners verändert wird. Vorzugsweise findet diese Veränderung automatisch bzw. selbsttätig statt, wobei weiter vorzugsweise das Spannmoment proportional zu einer Spannung des Riemens verändert wird.

Die zugrunde liegende Aufgabe wird ferner erfindungsgemäß mittels einer landwirtschaftlichen Arbeitsmaschine mit den Merkmalen des Anspruchs 10 gelöst. Diese umfasst eine Antriebseinrichtung, die insbesondere von einer Verbrennungskraftmaschine gebildet sein kann. Ferner umfasst die Arbeitsmaschine mindestens eine Abtriebseinrichtung, die mittels der Antriebseinrichtung antreibbar ist. Schließlich umfasst die Arbeitsmaschine mindestens ein erfindungsgemäßes Riemengetriebe, mittels dessen ein von der Antriebseinrichtung zur Verfügung gestelltes Drehmoment auf die Abtriebseinrichtung übertragbar ist. Letztere kann beispielsweise von einem Arbeitsorgan der Arbeitsmaschine gebildet sein. Entsprechendes ist dem nachstehenden Ausführungsbeispiel zu entnehmen.

Die erfindungsgemäße Vorrichtung ist nachstehend anhand eines Ausführungsbeispiels, das in den Figuren dargestellt ist, näher erläutert. Es zeigt:
- Fig. 1:: Eine Seitenansicht eines erfindungsgemäßen Riemengetriebes,
- Fig. 2:: Eine perspektivische Ansicht des Riemengetriebes gemäß Figur 1,
- Fig. 3:: Ein Detail eines Riemenspanners des Riemengetriebes gemäß Figur 1 in Zusammenwirkung mit einer Spanneinrichtung und einem Dämpfer und
- Fig. 4:: Eine schematische Seitenansicht einer landwirtschaftlichen Arbeitsmaschine, die mit einem erfindungsgemäßen Riemengetriebe ausgestattet ist.

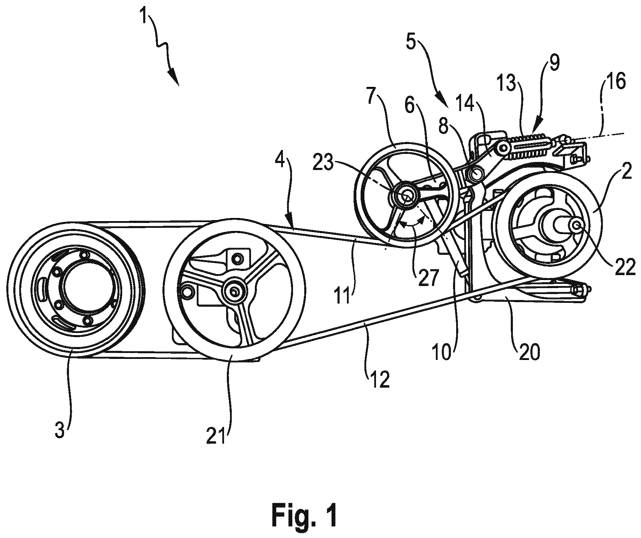

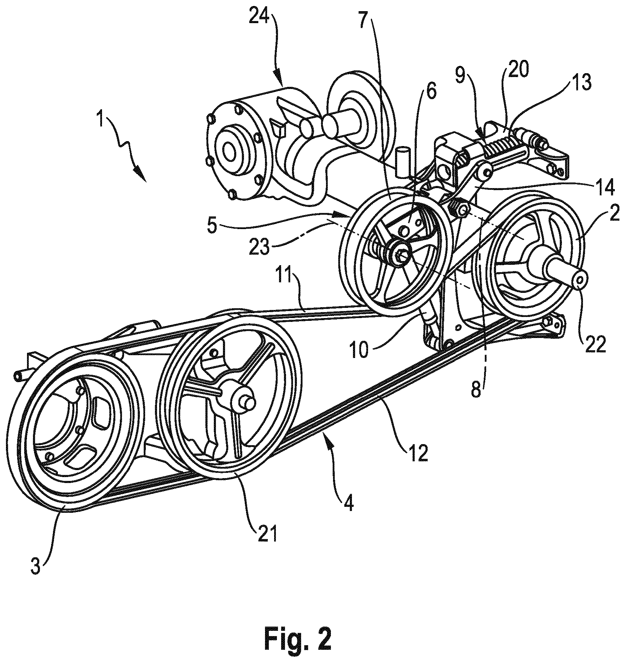

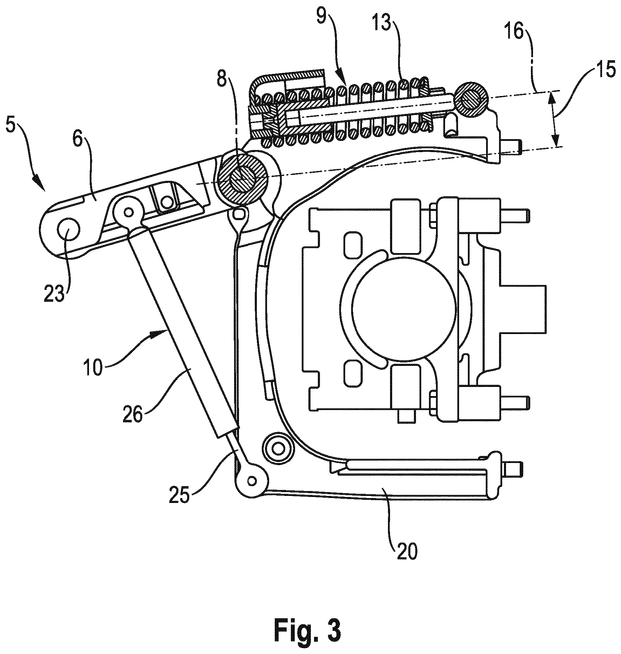

Ein Ausführungsbeispiel, das in den **Figuren 1 bis 4** dargestellt ist, umfasst ein erfindungsgemäßes Riemengetriebe **1,** das eine Antriebsscheibe **2,** eine Abtriebsscheibe **3** sowie einen die Antriebsscheibe **2** und die Abtriebsscheibe **3** verbindenden Riemen **4** umfasst. Die Antriebsscheibe **2** ist in Drehmoment übertragender Weise mit einer Antriebswelle **22** verbunden, die wiederum mit einem Getriebe **24** zusammenwirkt. Ferner umfasst das Riemengetriebe **1** in dem gezeigten Beispiel eine Beruhigungsrolle **21,** die jedoch für die Erzielung der Vorteile der vorliegenden Erfindung nicht relevant ist. Schließlich umfasst das Riemengetriebe **1** einen Riemenspanner **5,** der mit einem Leertrum **11** des Riemens **4** zusammenwirkt. Mittels des Riemenspanners **5** wird der Riemen **4** auf eine Betriebsspannung gespannt, sodass eine schlupffreie und mithin zuverlässige Übertragung eines Drehmoments von der Antriebsscheibe **2** auf die Abtriebsscheibe **3** erfolgen kann.

Der Riemenspanner **5** umfasst einen Haltearm **6** sowie eine an einem Ende des Haltearms **6** angeordnete Spannrolle **7.** Letztere ist um eine Drehachse **23** frei verdrehbar an dem Haltearm **6** gelagert. Der Haltearm **6** ist wiederum seinerseits an einem der Spannrolle **7** abgewandten Ende unter Ausbildung einer Schwenkachse **8** verschwenkbar an einem übergeordneten, ortsfesten Bauteil gelagert. Letzteres ist hier von einem starren Rahmen **20** gebildet. Die Schwenkachse **8** ist in dem gezeigten Beispiel senkrecht zu einer Riemenebene angeordnet, innerhalb derer sich ein Pfad des Riemens **4,** auf dem sich der Riemen **4** fortwährend bewegt, befindet.

Der Riemenspanner **5** wirkt mit einer Spanneinrichtung **9** zusammen, mittels derer ein Spannmoment auf den Riemenspanner **5** ausübbar und auf diese Weise die Spannrolle **7** in eine Richtung auf den Riemen **4** zu drückbar ist. Hierzu verfügt die Spanneinrichtung **9** über eine Spannfeder **13,** die mit einer Federkraft vorgespannt ist. Besagte Federkraft wirkt entlang einer Wirkungslinie **16** auf einen Spannhebel **14,** der in Drehmoment übertragender Weise mit dem Haltearm **6** des Riemenspanners **5** verbunden ist. Die Wirkungslinie **16** der Federkraft erstreckt sich unter Ausbildung eines Hebelarms **15** bezogen auf die Schwenkachse **8** des Riemenspanners **5,** sodass die Federkraft ein Spannmoment um die Schwenkachse **8** bewirkt.

Wie sich insbesondere anhand der Darstellung gemäß **Figur 1** ergibt, ist der Spannhebel **14** derart ausgebildet, dass sich ein Anlenkpunkt der Federkraft an dem Spannhebel **14** mit Verschwenken des Riemenspanners **5** um die Schwenkachse **8** auf einer Kreisbahn um letztere bewegt. Dies hat zur Folge, dass im Zuge des Verschwenkens des Riemenspanners **5** der Hebelarm **15** verändert wird. Mithin ändert sich auch das infolge der Spanneinrichtung **9** bewirkte Spannmoment, unter dessen Wirkung der Riemenspanner **5** den Riemen **4** spannt. Die Ausführung ist hier vorteilhafterweise derart gewählt, dass eine Schwenkbewegung des Riemenspanners **5** bzw. seiner Spannrolle **7** auf den Riemen **4** zu, die mit einer Erhöhung eines Umschlingungswinkels **27** zwischen Riemen **4** und Spannrolle **7** sowie einer Erhöhung der Spannung des Riemens **4** einhergeht, unmittelbar auch eine Erhöhung des Spannmoments zur Folge hat. Idealer Weise sind die geometrischen Verhältnisse zwischen Spanneinrichtung **9** und Riemenspanner **5** unter Verwendung eines Spannhebels **14** derart gewählt, dass sich die Spannung des Riemens **4** und das infolge der Federkraft bewirkte Spannmoment proportional zueinander verändern.

Erfindungsgemäß wirkt der Riemenspanner **5** ferner mit einem Dämpfer **10** zusammen, der in erfindungsgemäßer Weise richtungsabhängig wirkt. In dem gezeigten Beispiel ist der Dämpfer **10** einfach wirkend ausgebildet, sodass seine zweite Dämpfungskonstante, unter der der Dämpfer **10** eine Verschwenkung des Riemenspanners **5** dämpft, die mit einer Bewegung der Spannrolle **7** von dem Riemen **4** weg einhergeht, gleich Null ist. Der Dämpfer **10** ist hier von einer mit einem Kolben **25** und einem Zylinder **26** ausgestatteten Kolben-Zylinder-Einheit gebildet, wobei der Dämpfer **10** mit seinem ersten Ende an dem Haltearm **6** und seinem gegenüberliegenden zweiten Ende an dem ortsfesten Rahmen **20** angeordnet ist. Der Dämpfer **10** ist derart ausgerichtet, dass er eine Schwenkbewegung des Riemenspanners **5** um die Schwenkachse **8** - bezogen auf die Darstellung gemäß **Figur 1** - im Uhrzeigersinn nicht behindert bzw. nicht dämpft. Folglich kann der Riemenspanner **5** frei von einer Wirkung des Dämpfers **10** derart um die Schwenkachse **8** verschwenkt werden, dass sich die Spannrolle **7** von dem Riemen **4** weg bewegt. Diese Funktionalität erlaubt es dem Riemenspanner **5** im Zuge einer plötzlichen Straffung des Leertrums **11** des Riemens **4,** insbesondere infolge einer Lastumkehr bei fallendem Drehmoment an der Antriebsscheibe **2,** der plötzlich steigenden Spannung in dem Leertrum **11** auszuweichen. In dieser Konstellation wird das Leertrum **11** kurzzeitig zum Lasttrum, während ein Lasttrum **12** des Riemens **4** kurzzeitig zum Leertrum wird.

Mittels Wirkung des Dämpfers **10** ist sodann eine Schwenkbewegung des Riemenspanners **5** entgegen dem Uhrzeigersinn, das heißt in solcher Weise, dass sich die Spannrolle **7** auf den Riemen **4** zu bewegt, gedämpft, wobei die erste Dämpfungskonstante wirkt. Hierdurch wird verhindert, dass der Riemenspanner **5** nach Entlastung des Riemens **4** in dem Leertrum **11** unmittelbar den Riemen **4** nachspannt. Stattdessen wird der Riemen **4** zumindest einen Moment lang mit einer Spannung betrieben, die unterhalb der eigentlich gewünschten Betriebsspannung liegt. Dies hat zur Folge, dass zwischen dem Riemen **4** und der Antriebsscheibe **2** bzw. der Abtriebsscheibe **3** ein Schlupf auftritt, der eine Übertragung von Drehmomenten zwischen der Antriebsscheibe **2** und der Abtriebsscheibe **3** zumindest vermindert. Dies hat den positiven Effekt, dass Drehmomentspitzen, die insbesondere an der Antriebsscheibe **2** vorliegen können, nicht unmittelbar an den Riemen **4** sowie an die Abtriebsscheibe **3** übertragen werden. Hierdurch werden beide Bauteile vor übermäßigem Verschleiß geschützt.

Derartige Drehmomentspitzen und plötzliche Lastumkehrungen in dem Riemen **4** können beispielsweise im Moment des Anlassens einer Verbrennungskraftmaschine auftreten, die als Antriebseinrichtung verwendet wird. Nach Überwindung des "unruhigen Betriebs" kann der Riemen **4** wieder auf seine Betriebsspannung gespannt werden. Die zeitliche Verzögerung, mit der der Riemenspanner **5** auf den Riemen **4** einwirkt, wird erfindungsgemäß mittels des Dämpfers **10** erreicht, der die Nachführung des Riemenspanners **5,** die durch das von der Spanneinrichtung **9** bewirkte Spannmoment bedingt ist, verzögert. Somit wird der Effekt erzielt, dass während des Zeitraums des "unruhigen Betriebs" Drehmomentspitzen aufgrund des Schlupfs zwischen Riemen **4** und Antriebsscheibe **2** sowie Abtriebsscheibe **3** gewissermaßen ausgeklammert werden und die Wirkung des Riemenspanners **5** erst dann wieder einsetzt, wenn dieser Zeitraum überwunden ist. Während des normalen Betriebs überträgt das Riemengetriebe **1** daraufhin wunschgemäß das an der Antriebsscheibe **2** anliegende Drehmoment, da der Riemen **4** mittels des Riemenspanners **5** auf seine Betriebsspannung gespannt ist.

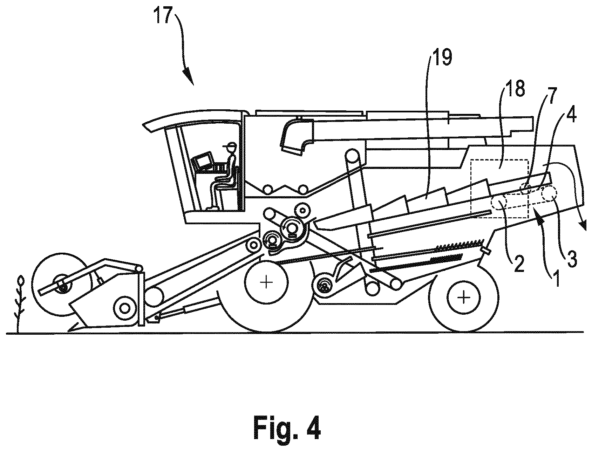

**Figur 4** zeigt beispielhaft eine erfindungsgemäße landwirtschaftliche Arbeitsmaschine **17,** in der das erfindungsgemäße Riemengetriebe **1** verbaut ist. Die Arbeitsmaschine **17** umfasst eine Antriebseinrichtung **18,** die hier in Form einer Verbrennungskraftmaschine ausgebildet ist. Ferner umfasst die Arbeitsmaschine **17** eine Abtriebseinrichtung **19,** die hier beispielhaft von einem Trennorgan, nämlich einem Hordenschüttler, gebildet ist. Mittels des Riemengetriebes **1** wird ein von der Antriebseinrichtung **18** zur Verfügung gestelltes Drehmoment auf die Abtriebseinrichtung **19** übertragen, sodass letztere betrieben werden kann.

### Bezugszeichenliste

- 1: Riemengetriebe
- 2: Antriebsscheibe
- 3: Abtriebsscheibe
- 4: Riemen
- 5: Riemenspanner
- 6: Haltearm
- 7: Spannrolle
- 8: Schwenkachse
- 9: Spanneinrichtung
- 10: Dämpfer
- 11: Leertrum
- 12: Lasttrum
- 13: Spannfeder
- 14: Spannhebel
- 15: Hebelarm
- 16: Wirkungslinie
- 17: Arbeitsmaschine
- 18: Antriebseinrichtung
- 19: Abtriebseinrichtung
- 20: Rahmen
- 21: Beruhigungsrolle
- 22: Antriebswelle
- 23: Drehachse
- 24: Getriebe
- 25: Kolben
- 26: Zylinder
- 27: Umschlingungswinkel

## Patentansprüche

1. Riemengetriebe (1), umfassend
- mindestens einen Riemen (4)
- mindestens einen Riemenspanner (5)
- mindestens eine Spanneinrichtung (9) sowie
- mindestens einen Dämpfer (10),
wobei der Riemenspanner (5) einen um eine Schwenkachse (8) verschwenkbaren Haltearm (6) sowie eine an dem Haltearm (6) angeordnete Spannrolle (7) aufweist,
wobei mittels der Spanneinrichtung (9) ein bezogen auf die Schwenkachse (8) wirkendes Spannmoment auf den Riemenspanner (5) ausübbar ist,
wobei mittels des Dämpfers (10) eine Schwenkbewegung des Riemenspanners (5) um die Schwenkachse (8) dämpfbar ist und der Dämpfer (10) richtungsabhängige Dämpfungskonstanten aufweist,
**dadurch gekennzeichnet, dass**
eine erste Dämpfungskonstante zur Dämpfung einer Schwenkbewegung des Riemenspanners (5) um die Schwenkachse (8), die mit einer Bewegung der Spannrolle (7) auf den Riemen (4) zu korrespondiert, größer ist als eine zweite Dämpfungskonstante zur Dämpfung einer Schwenkbewegung des Riemenspanners (5) um die Schwenkachse (8), die mit einer Bewegung der Spannrolle (7) von dem Riemen (4) weg korrespondiert, wobei die zweite Dämpfungskonstante vernachlässigbar klein ist, wobei der Dämpfer (10) einfach wirkend ausgebildet ist, sodass mittels des Dämpfers (10) lediglich die Schwenkbewegung des Riemenspanners (5) um die Schwenkachse (8) dämpfbar ist, die mit der Bewegung der Spannrolle (7) auf den Riemen (4) zu korrespondiert.

2. Riemengetriebe (1) nach Anspruch 1, **dadurch gekennzeichnet, dass** der Dämpfer (10) von einer Kolben-Zylinder-Einheit gebildet ist.

3. Riemengetriebe (1) nach einem der Ansprüche 1 bis 2, **dadurch gekennzeichnet, dass** der Dämpfer (10) von einem Viskositätsdämpfer gebildet ist.

4. Riemengetriebe (1) nach einem der Ansprüche 1 bis 3, **dadurch gekennzeichnet, dass** der Riemenspanner (5) mit einem Leertrum (11) des Riemens (4) zusammenwirkt.

5. Riemengetriebe (1) nach einem der Ansprüche 1 bis 4, **dadurch gekennzeichnet, dass** die Spanneinrichtung (9) eine Spannfeder (13) umfasst, deren Federkraft mittels mindestens eines Spannhebels (14) auf den Haltearm (6) des Riemenspanners (5) übertragbar ist.

6. Riemengetriebe (1) nach Anspruch 5, **dadurch gekennzeichnet, dass** der Spannhebel (14) derart an dem Haltearm (6) angeordnet ist, dass sich ein Hebelarm (15) zwischen einer Wirkungslinie (16) der Federkraft der Spannfeder (13) und der Schwenkachse (8) des Riemenspanners (5) mit Verschwenken des Riemenspanners (5) um die Schwenkachse (8) verändert.

7. Verfahren zum Betrieb eines Riemengetriebes (1), wobei das Riemengetriebe (1) eine Antriebsscheibe (2), eine Abtriebsscheibe (3), einen Riemen (4), einen Riemenspanner (5), eine Spanneinrichtung (9) sowie einen Dämpfer (10) umfasst, umfassend die folgenden Verfahrensschritte:
a) Eine Spannrolle (7) des Riemenspanners (5) wird unter Aufbringung eines Spannmoments, das mittels der Spanneinrichtung (9) auf einen Haltearm (6) des Riemenspanners (5) aufgebracht wird, gegen den Riemen (4) gespannt, sodass der Riemen (4) auf eine Betriebsspannung gespannt wird.
b) Im Zuge einer Verringerung eines auf die Antriebsscheibe (2) wirkenden Antriebsdrehmoments, die mit einer Lastumkehr zwischen einem Leertrum (11) und einem Lasttrum (12) des Riemens (4) einhergeht, wird der Riemenspanner (5), der mit dem Leertrum (11) zusammenwirkt, um eine Schwenkachse (8) in Richtung von dem Riemen (4) weg verschwenkt, sodass eine Spannung des Riemens (4) unter die Betriebsspannung sinkt.
c) Mittels Wirkung der Spanneinrichtung (9) wird der Riemenspanner (5) wieder zurück in Richtung auf den Riemen (4) zu verschwenkt, sodass der Riemen (4) wieder auf seine Betriebsspannung gespannt wird,
**gekennzeichnet durch** den folgenden Verfahrensschritt:
d) Die Verschwenkung des Riemenspanners (5) in Richtung auf den Riemen (4) zu wird mittels eines des Dämpfers (10) stärker gedämpft, als die Verschwenkung des Riemenspanners (5) in Richtung von dem Riemen (4) weg, nämlich, dass der Dämpfer (10) einfach wirkend ausgebildet ist, sodass mittels des Dämpfers (10) lediglich die Schwenkbewegung des Riemenspanners (5) um die Schwenkachse (8) dämpfbar ist, die mit der Bewegung der Spannrolle (7) auf den Riemen (4) zu korrespondiert.

8. Landwirtschaftliche Arbeitsmaschine (17), umfassend
- eine Antriebseinrichtung (18),
- mindestens eine Abtriebseinrichtung (19), die mittels der Antriebseinrichtung (18) antreibbar ist, sowie
- mindestens ein Riemengetriebe (1) nach einem der Ansprüche 1 bis 6, mittels dessen ein von der Antriebseinrichtung (18) zur Verfügung gestelltes Drehmoment auf die Abtriebseinrichtung (19) übertragbar ist.

## Claims

1. A belt drive (1), comprising
- at least one belt (4)
- at least one belt tensioner (5)
- at least one tensioning device (9), as well as
- at least one damper (10),
wherein the belt tensioner (5) has a retaining arm (6) which can be pivoted about a pivot axis (8), as well as a tensioning roller (7) disposed on the retaining arm (6),
wherein, by means of the tensioning device (9), a tensioning moment acting with respect to the pivot axis (8) can be exerted on the belt tensioner (5),
wherein, by means of the damper (10), a pivoting movement of the belt tensioner (5) about the pivot axis (8) can be damped and the damper (10) has directional damping constants,
**characterized in that**
a first damping constant for damping a pivoting movement of the belt tensioner (5) about the pivot axis (8) which corresponds to a movement of the tensioning roller (7) onto the belt (4) is larger than a second damping constant for damping a pivoting movement of the belt tensioner (5) about the pivot axis (8) which corresponds to a movement of the tensioning roller (7) away from the belt (4), wherein the second damping constant is negligibly small, wherein the damper (10) is single-acting in construction so that, by means of the damper (10), only the pivoting movement of the belt tensioner (5) about the pivot axis (8) which corresponds to the movement of the tensioning roller (7) onto the belt (4) can be damped.

2. The belt drive (1) according to claim 1, **characterized in that** the damper (10) is formed by a piston and cylinder unit.

3. The belt drive (1) according to one of claims 1 to 2, **characterized in that** the damper (10) is formed by a viscosity damper.

4. The belt drive (1) according to one of claims 1 to 3, **characterized in that** the belt tensioner (5) cooperates with a no-load side (11) of the belt (4).

5. The belt drive (1) according to one of claims 1 to 4, **characterized in that** the tensioning device (9) comprises a tension spring (13) the spring force of which can be transmitted to the retaining arm (6) of the belt tensioner (5) by means of at least one tension lever (14).

6. The belt drive (1) according to claim 5, **characterized in that** the tension lever (14) is disposed on the retaining arm (6) in a manner such that a lever arm of a force (15) between a line of action (16) of the spring force of the tension spring (13) and the pivot axis (8) of the belt tensioner (5) is changed as the belt tensioner (5) is pivoted about the pivot axis (8).

7. A method for operating a belt drive (1), wherein the belt drive (1) comprises a drive pulley (2), a driven pulley (3), a belt (4), a belt tensioner (5), a tensioning device (9) as well as a damper (10), comprising the following steps of the method:
a) a tensioning roller (7) of the belt tensioner (5) is tensioned against the belt (4) with the application of a tensioning moment which is applied to a retaining arm (6) of the belt tensioner (5) by means of the tensioning device (9), so that the belt (4) is tensioned to an operating tension,
b) during the course of a reduction in a drive torque acting on the drive pulley (2) which is associated with a reversal of load between a no-load side (11) and a load side (12) of the belt (4), the belt tensioner (5), which cooperates with the no-load side (11), is pivoted about a pivot axis (8) in the direction away from the belt (4), so that a tension of the belt (4) drops below the operating tension,
c) by means of the action of the tensioning device (9), the belt tensioner (5) is pivoted back again in the direction onto the belt (4), so that the belt (4) is again tightened to its operating tension,
**characterized by the following step of the method:**
d) the pivoting of the belt tensioner (5) in the direction onto the belt (4) is more strongly damped by means of one of the dampers (10) than the pivoting of the belt tensioner (5) in the direction away from the belt (4), namely in that the damper (10) is single-acting in construction so that, by means of the damper (10), only the pivoting movement of the belt tensioner (5) about the pivot axis (8) which corresponds to the movement of the tensioning roller (7) onto the belt (4) can be damped.

8. An agricultural working machine (17), comprising
- a drive device (18),
- at least one driven device (19) which can be driven by means of the drive device (18), as well as
- at least one belt drive (1) as claimed in one of claims 1 to 6, by means of which a torque made available by the drive device (18) can be transmitted to the driven device (19).

## Revendications

1. Transmission à courroie (1), comprenant
- au moins une courroie (4),
- au moins un tendeur de courroie (5),
- au moins un dispositif de tension (9), ainsi que
- au moins un amortisseur (10),
dans laquelle le tendeur de courroie (5) présente un bras de support (6) pouvant pivoter autour d'un axe de pivotement (8), ainsi qu'une poulie de tension (7) disposée sur le bras de support (6),
dans laquelle le dispositif de tension (9) permet d'exercer un couple de tension sur le tendeur de courroie (5), qui agit par rapport à l'axe de pivotement (8),
dans laquelle l'amortisseur (10) permet d'amortir un mouvement pivotant du tendeur de courroie (5) autour de l'axe de pivotement (8), et l'amortisseur (10) présente des constantes d'amortissement qui sont fonction de la direction,
**caractérisée en ce que**
une première constante d'amortissement, destinée à amortir un mouvement pivotant du tendeur de courroie (5) autour de l'axe de pivotement (8) qui correspond à un mouvement de la poulie de tension (7) en direction de la courroie (4), est supérieure à une deuxième constante d'amortissement destinée à amortir un mouvement pivotant du tendeur de courroie (5) autour de l'axe de pivotement (8) qui correspond à un mouvement dans la direction opposée à la courroie (4), la deuxième constante d'amortissement étant négligeable, l'amortisseur (10) étant réalisé avec simple effet, de sorte que l'amortisseur (10) permet d'amortir seulement le mouvement pivotant du tendeur de courroie (5) autour de l'axe de pivotement (8) qui correspond au mouvement de la poulie de tension (7) en direction de la courroie (4).

2. Transmission à courroie (1) selon la revendication 1, **caractérisée en ce que** l'amortisseur (10) est constitué d'une unité piston-cylindre.

3. Transmission à courroie (1) selon une des revendications 1 à 2, **caractérisée en ce que** l'amortisseur (10) est constitué d'un amortisseur visqueux.

4. Transmission à courroie (1) selon une des revendications 1 à 3, **caractérisée en ce que** le tendeur de courroie (5) coopère avec un brin mou (11) de la courroie (4).

5. Transmission à courroie (1) selon une des revendications 1 à 4, **caractérisée en ce que** le dispositif de tension (9) comprend un ressort de tension (13) dont la force élastique peut être transmise au bras de support (6) du tendeur de courroie (5) par au moins un levier de tension (14).

6. Transmission à courroie (1) selon la revendication 5, **caractérisée en ce que** le levier de tension (14) est disposé sur le bras de support (6) de manière à ce qu'un bras de levier (15) entre une ligne d'action (16) de la force élastique du ressort de tension (13) et l'axe de pivotement (8) du tendeur de courroie (5) change avec le pivotement du tendeur de courroie (5) autour de l'axe de pivotement (8).

7. Procédé pour faire fonctionner une transmission à courroie (1), ladite transmission à courroie (1) comportant une poulie motrice (2), une poulie menée (3), une courroie (4), un tendeur de courroie (5), un dispositif de tension (9) ainsi qu'un amortisseur (10), le procédé comprenant les étapes de procédé suivantes :
a) une poulie de tension (7) du tendeur de courroie (5) est serrée contre la courroie (4) en produisant un couple de tension qui est appliqué à un bras de support (6) du tendeur de courroie (5) au moyen du dispositif de tension (9), de sorte que la courroie (4) est tendue avec une tension de service,
b) dans le cadre d'une réduction d'un couple moteur agissant sur la poulie motrice (2), qui s'accompagne d'une inversion de charge entre un brin mou (11) et un brin tendu (12) de la courroie (4), le tendeur de courroie (5) qui coopère avec le brin mou (11) est pivoté autour d'un axe de pivotement (8), dans la direction opposée à la courroie (4), de sorte qu'une tension de la courroie (4) diminue et passe en dessous de la tension de service,
c) du fait de l'action du dispositif de tension (9), le tendeur de courroie (5) est de nouveau pivoté en direction de la courroie (4), de sorte que la courroie (4) est de nouveau tendue avec sa tension de service, **caractérisé en ce qu'**il présente l'étape de procédé suivante :
d) le pivotement du tendeur de courroie (5) en direction de la courroie (4) est soumis par l'amortisseur (10) à un amortissement plus important que le pivotement du tendeur de courroie (5) dans la direction opposée à la courroie (4), c'est-à-dire que l'amortisseur (10) est réalisé avec simple effet, de sorte que l'amortisseur (10) permet d'amortir seulement le mouvement pivotant du tendeur de courroie (5) autour de l'axe de pivotement (8) qui correspond au mouvement de la poulie de tension (7) en direction de la courroie (4).

8. Machine agricole (17), comprenant
- un dispositif d'entraînement (18),
- au moins un dispositif mené (19) qui peut être entraîné au moyen du dispositif d'entraînement (18), ainsi que
- au moins une transmission a courroie (1) selon une des revendications 1 à 6, au moyen de laquelle un couple fourni par le dispositif d'entraînement (18) peut être transmis au dispositif mené (19).
